# EUROPÄISCHE PATENTANMELDUNG

(11) **EP 2 380 659 A1**
(43) Veröffentlichungstag der Anmeldung: **26.10.2011**
(21) Anmeldenummer: 10004229.0
(22) Anmeldetag: 21.04.2010
(51) Int. Cl.: B01J 19/30, C03C 3/089

(54) **Füllkörper vom Pallringtyp**

(71) Anmelder: De Dietrich Process Systems GmbH, 55122 Mainz (DE)
(72) Erfinder: Dichtl, Gottfried, 55268 Nieder-Olm (DE)
(74) Vertreter: Andrae, Steffen

(57) **Zusammenfassung**

Füllkörper (1) vom Pallringtyp in Form von Hohlzylindern (2) oder Halbzylindern, bei denen Abschnitte (3) der Zylinderwand stegartig in Richtung der Zylinderachse eingebogen sind und die vollständig aus einem temperatur- und chemikalienbeständigen Glas, insbesondere Borosilikatglas 3.3, hergestellt sind. Sie werden vorzugsweise durch Schneiden und Verformen ausgehend von Glasrohren hergestellt.

## Beschreibung

Die Erfindung betrifft neuartige Füllkörper, die in ihrer Form, Größe und Geometrie an sich bekannten Füllkörpern vom Typ Pallringe ähneln, die jedoch unter Anwendung eines neuartigen Herstellungsverfahrens aus einem für die Herstellung von Füllkörpern vom Pallringtyp noch nicht verwendeten Material hergestellt sind.

Als Füllkörper werden in der Verfahrenstechnik und im Apparatebau, insbesondere im Apparatebau für die chemische Industrie, Formkörper unterschiedlicher geometrischer Formen aus unterschiedlichen Materialien bezeichnet, die in loser Schüttung insbesondere zur Befüllung von Trennsäulen verwendet werden. Die aus großen Mengen von Füllkörpern gebildeten Schüttungen liegen dabei auf perforierten Böden der Trennsäulen und dienen dazu, im Inneren der Trennsäule eine große Oberfläche bereit zu stellen, an der ein intensiver Kontakt und Materialaustausch zwischen einer aufsteigenden Dampfphase und einer abtropfenden flüssigen Phase in Form eines Flüssigkeitsfilms stattfindet, der die Trennleistung bestimmt. Um für eine bestimmte Trennaufgabe geeignete Schüttungen bilden zu können, müssen die Füllkörper leicht genug sein und/oder eine ausreichende mechanische Festigkeit aufweisen, um Schüttungsbetten der erforderlichen Höhe, die bei industriellen Anwendungen 3 m und mehr betragen kann, bilden zu können, ohne zu Bruch zu gehen. Das gebildete Schüttungsbett soll gut, d.h. ohne einen zu hohen Strömungswiderstand zu leisten, von einer aufsteigenden Dampfphase durchströmt werden können, und die Füllkörper sollen eine Temperatur- und Chemikalienbeständigkeit aufweisen, die den jeweiligen Trennaufgaben angemessen ist.

Zu den einfachsten und am längsten bekannten Füllkörpern gehören die sogenannten "Raschig-Ringe", die Hohlzylinder von etwa gleicher Höhe und Durchmesser darstellen und aus verschiedenen Materialien, darunter insbesondere auch Glas, hergestellt sein können.

Neben den Raschig-Ringen gibt es Füllkörper in Sattel-Form (z.B. Berl-Sättel), die häufig aus Keramik hergestellt sind, und sogenannte Pallringe, worunter Hohlzylinder zu verstehen sind, deren Zylinderwand durch Stanzen oder Schneiden teilweise zur Bildung von ins Innere der Hohlzylinder weisenden Zungen oder Schaufeln und entsprechenden Öffnungen in der Zylinderwand genutzt wird. Typische Pallringe des Standes der Technik sind aus Metallblechen hergestellt, die als flache Bleche gestanzt, in Abschnitte geschnitten und zu Hohlzylindern gebogen werden und daher in der Zylinderwand eine Nahtlinie oder Spalte aufweisen. Aus Metall sind meist auch die sogenannten Hochleistungs-Ringe hergestellt.

Zu denen neueren Entwicklungen zählen Füllkörper aus Kunststoffen, deren Formen unter Nutzung der Möglichkeiten der Verarbeitung von Kunststoffen wie z.B. des Spritzgusses sehr vielfältig sind. Je nach den zu erwartenden thermischen und chemischen Anforderungen werden für derartige Füllkörper die verschiedensten Kunststoffe verwendet, die von einfachen Thermoplasten wie Polyethylen (PE) oder Polypropylen (PP) bis zu sogenannten Hochleistungskunststoffen reichen, zu denen zahlreiche fluorierte Kunstoffen wie Polyvinylidenfluorid (PVDF), fluoriertes Ethylenpropylen (FEP), Perfluoralkoxypolymer (PFA), Ethylen-Chlortrifluorethylen (E-CTFE), Ethylen-Tetrafluorethylen (E-TFE) oder Kunststoffe mit hohen Anteilen aromatischer Bausteine in der Polymerhauptkette gehören.

Der Stand der Technik ist sehr vielgestaltig. Ein guter aktueller Überblick kann jedoch erhalten werden, wenn man die Produktpaletten der verschiedenen Anbieter von Füllkörpern betrachtet, z.B. der deutschen Firmen Raschig GmbH, Ludwigshafen; der Hilgenberg GmbH, Malsfeld; W. Heinrich Prym GmbH & Co.KG, Aachen/Eilendorf; der ENVIMAC Engineering GmbH, Oberhausen; oder die Produktpalette der englischen Firma The Pall Ring Company Ltd., zumal alle Firmen ihre Produkte auch über das Internet anbieten.

Im Hinblick auf Patentliteratur zu Füllkörpern vom Pallringtyp, die aufgrund der Füllkörpergeometrie gewisse Ähnlichkeiten mit Füllkörpern aufweisen, wie sie in der vorliegenden Anmeldung beschrieben werden, können, ohne Anspruch auf Vollständigkeit, ergänzend genannt werden das deutsche Patent 853 159, die deutschen Offenlegungsschriften DE 26 03 124 und DE 195 31 151 A1, die Europäische Patentanmeldung EP 0 607 627 A1, das US-Patent 3,266,787 und das britische Patent 1 385 672 und der in diesen Schriften zitierte weitere Stand der Technik.

Obwohl heute Füllkörper für nahezu alle Trennaufgaben angeboten werden, weisen diese jedoch alle auch Nachteile auf, von denen viele materialbedingt sind: Füllkörper aus gängigen Metallen können in stark korrodierenden Umgebungen nicht verwendet werden, oder müssen aus teuren Spezialmetallen hergestellt werden; Füllkörper aus Keramik sind bruchgefährdet bzw. müssen eine relativ hohe Materialdicke aufweisen, was zu einem hohen Gesamtgewicht der Füllkörperschüttungen führen kann und zu einem hohen Druckverlust in einer Trennsäule; Füllkörper aus Kunststoffen können zwar für hohe Trennleistungen ausgelegt werden und sind leicht, weisen jedoch meist eine eingeschränkte thermische Belastbarkeit auf oder können nicht zur Trennung zahlreicher organischer Substanzen verwendet werden, oder sie müssen aus teuren Hochleistungskunststoffen hergestellt werden, von denen viele hohe Anteile an Halogenen aufweisen.

Der Werkstoff Glas, der z.B. wegen der guten thermischen und chemischen Beständigkeit von Apparateglas bei gleichzeitig moderaten Kosten im chemischen Apparatebau allgegenwärtig ist, wurde bisher nur sehr eingeschränkt für Füllkörper verwendet, und zwar im wesentlichen nur für einfache zylindrische Raschigringe oder Glaskugeln mit einer nur geringen Trennwirkung, sowie zur Herstellung von spannfederähnlichen sogenannten Wilsonspiralen oder sogenannten Fenskeringen, die einzelnen Windungen der Wilsonspiralen entsprechen, wobei diese Spezialfüllkörper für Spezialanwendungen auch in sehr kleinen Abmessungen im Millimeterbereich eingesetzt werden können.

Es ist Aufgabe der vorliegenden Erfindung, neue Füllkörper zu schaffen, die bezüglich ihrer Trennleistung bekannten Hochleistungsfüllkörpern aus Kunststoffen oder Metall entsprechen, jedoch temperatur- und korrosionsbeständig sind, Schüttungen von mäßigem Gewicht mit einem geringen Druckverlust ergeben und aus einem kostengünstigen Material hergestellt sind.

Diese Aufgabe wird durch Füllkörper gemäß den Patentansprüchen 1 bis 15 sowie ein neues Verfahren zur Herstellung derartiger Füllkörper gelöst, dessen grundlegende Merkmale in den Ansprüchen 16 bis 20 wiedergegeben werden.

Der nachfolgenden Beschreibung sind weitere Erläuterungen zu den in den Ansprüchen verwendeten technischen Begriffen sowie konkrete Ausführungsformen der Erfindung zu entnehmen.

Gemäß der vorliegenden Erfindung werden Füllkörper geschaffen, die eine gewisse Ähnlichkeit mit bekannten Füllkörpern vom Pallringtyp aufweisen, jedoch aus einem für den Apparatebau und den Kontakt mit Chemikalien geeigneten Glas hergestellt sind, insbesondere einem Borosilikatglas, und deren Formgestaltung und Geometrie die Möglichkeiten nutzt, die der Werkstoff Glas im Unterschied zu dem traditioneller Weise für Füllkörper vom Pallringtyp verwendeten Metallblech bietet.

Als "Füllkörper vom Pallringtyp" werden dabei Füllkörper bezeichnet, deren Grundform ein Hohlzylinder ist und bei denen Teilbereiche der Zylinderwand dazu genutzt werden, in das Zylinderinnere weisende Zungen oder Stege und gleichzeitig fensterartige Öffnungen in der Zylinderwand zu bilden. Die nach innen weisenden Elemente herkömmlicher Pallringe aus Metall sind dabei jedoch in der Regel eckige, nur einseitig mit der Zylinderwand verbundene gerade oder leicht gekrümmte Zungen. Da herkömmliche Füllkörper vom Pallringtyp durch Biegen von vorgestanzten Metallblechen hergestellt werden, weisen sie einen Längsspalt oder eine Naht auf.

Bei den erfindungsgemäßen "Füllkörpern von Pallringtyp" sind dagegen die in das Zylinderinnere weisenden Elemente stegartig ausgebildet und beidseitig, d.h. doppelt, mit der Zylinderwand des Füllkörpers verbunden. Die Form der Stege spiegelt die Verarbeitungseigenschaften von erhitztem Glas wider, nämlich plastisch verformbar zu sein und eine gewisse Fließfähigkeit zu zeigen, was sich in einer geschwungenen, abgerundeten Form der Stege äußern kann und darin, dass die Länge der Stege nicht exakt der Länge der in der Zylinderwand gebildeten fensterartigen Öffnungen entsprechen muss. Ferner weisen erfindungsgemäße Füllkörper keine Naht in der Zylinderfläche auf.

Wenn die erfindungsgemäßen Füllkörper in der Beschreibung und den Figuren anhand von geraden Kreiszylindern erläutert werden, und wenn im Zusammenhang mit den erfindungsgemäßen Füllkörpern von Hohlzylinderform oder einfach Zylinderform gesprochen wird, soll das nicht bedeuten, dass die Grundform der Füllkörper stets ein gerader Kreiszylinder sein muss. Vielmehr kann die Umfangsform auch von der Kreisform abweichen, z.B. oval oder auch unsymmetrisch sein. Die Hohlzylinder müssen auch keine geraden Zylinder sein, sondern können durch schräges Abschneiden auch schiefe Zylinder sein, die z.B. Penne-Teigwaren ähneln.

Wenn von Halbzylindern gesprochen wird, sind durch Schneiden von Hohlzylindern in Längsrichtung in der Zylinderachse oder parallel dazu gebildete runde, einseitig offene Rinnen gemeint, wobei auch in diesem Fall die runde Form der Rinne keinem idealen Kreiszylinder entsprechen muss, sondern auch davon abweichen kann, z.B. oval, parabelförmig oder auch unsymmetrisch sein kann.

Nachfolgend werden fünf verschiedene Ausführungsformen erfindungsgemäßer Füllkörper anhand von Figuren noch näher erläutert.

In den Figuren zeigen:

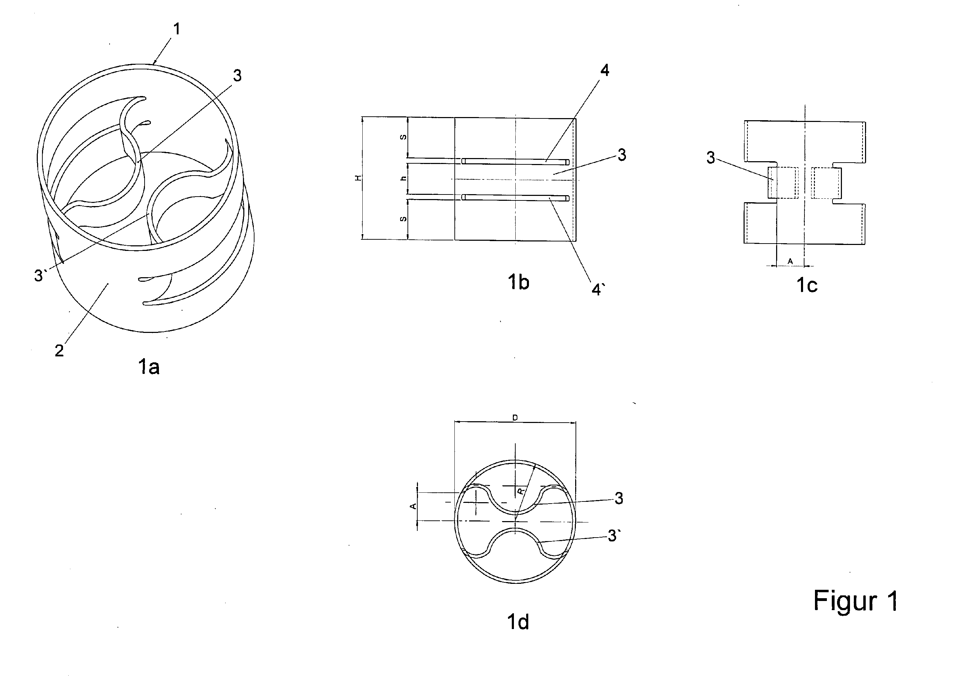

- Figur 1: eine einfache erste Grundform eines erfindungemäßen Füllkörpers mit zwei einander gegenüber liegenden, in Richtung der Zylinderachse eingedrückten stegartig verformten Abschnitten und zwei beidseitig an die Zone mit diesen Abschnitten angrenzenden Hohlzylinderabschnitten, wobei Figur 1a eine isometrische Ansicht des gesamten Füllkörpers zeigt, Figur 1b eine frontale Ansicht einer Zylinderseite mit zwei parallelen Einschnitten, die den Stegabschnitt definieren und begrenzen, Figur 1c eine frontale Ansicht eines gegenüber Figur 1b um 90° gedrehten Füllkörpers mit eingedrückten stegartigen Abschnitten, und Figur 1d eine Draufsicht auf den Füllkörper von oben in Richtung der Zylinderachse;

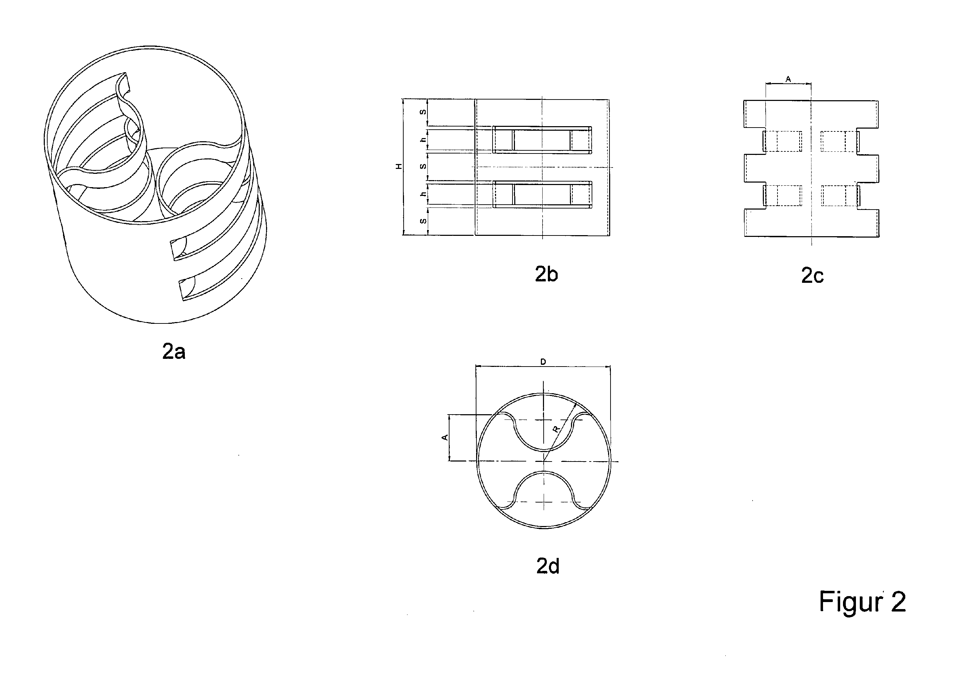

- Figur 2: eine Ansicht einer zweiten Ausführungsform eines erfindungsgemäßen Füllkörpers mit zwei Zonen mit jeweils zwei stegartig verformten Abschnitten, die auf der Zylinderwand parallel zueinander in verschiedener Höhe angeordnet sind und jeweils beidseitig von Hohlzylinderabschnitten begrenzt sind, wobei die Darstellungen 2a, 2b, 2c und 2d den entsprechenden Ansichten in Figur 1 entsprechen;

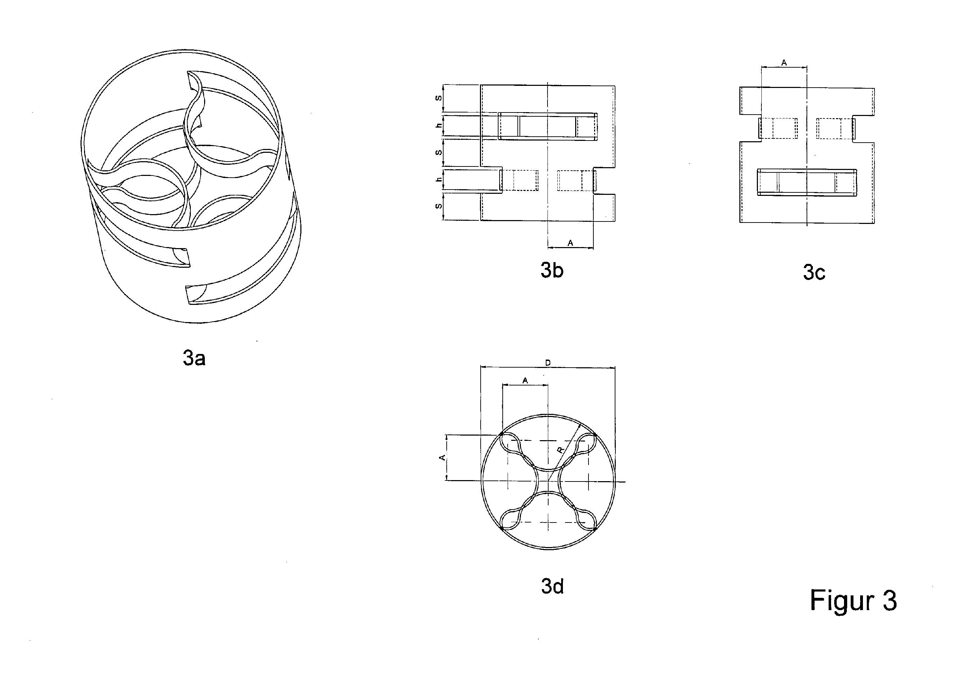

- Figur 3: eine Ansicht einer dritten Ausführungsform eines erfindungsgemäßen Füllkörpers mit zwei Zonen mit stegartig verformten Abschnitten, die auf der Zylinderwand gegeneinander um 90° versetzt in verschiedener Höhe angeordnet sind und jeweils beidseitig von Hohlzylinderabschnitten begrenzt sind, wobei die Darstellungen 3a, 3b, 3c und 3d den entsprechenden Ansichten in Figur 1 entsprechen;

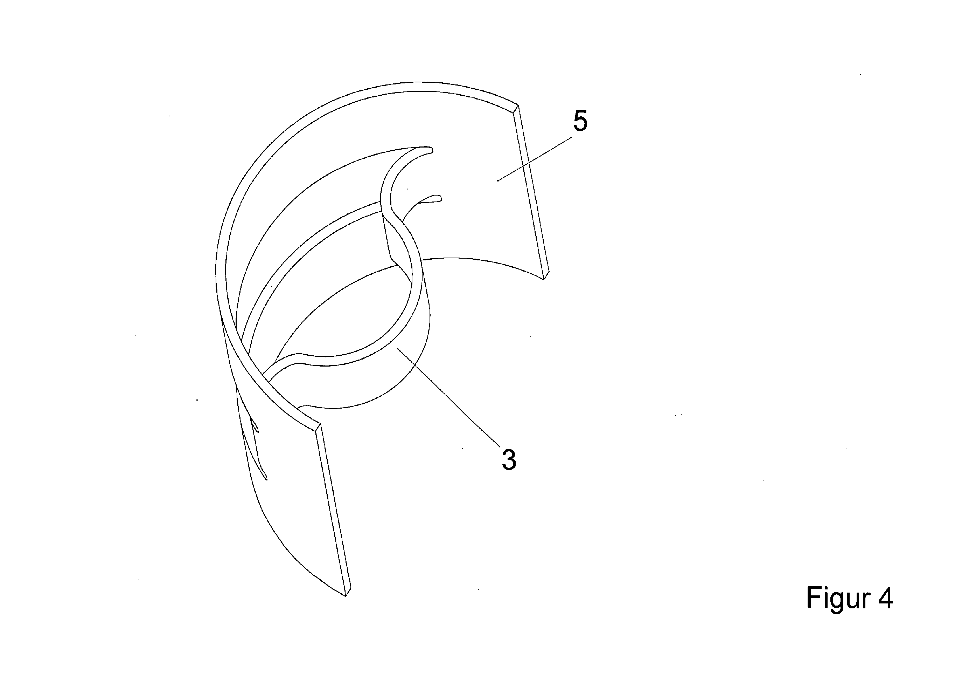

- Figur 4: eine Ansicht einer weiteren Ausführungsform eines erfindungsgemäßen Füllkörpers, bei der die Wandung des Füllkörpers statt durch einen Hohlzylinder durch einen offenen Halbzylinder gebildet wird, den man sich als durch einen Längsschnitt durch einen zylindrischen Füllkörper gemäß Figur 1 gebildet vorstellen kann; und

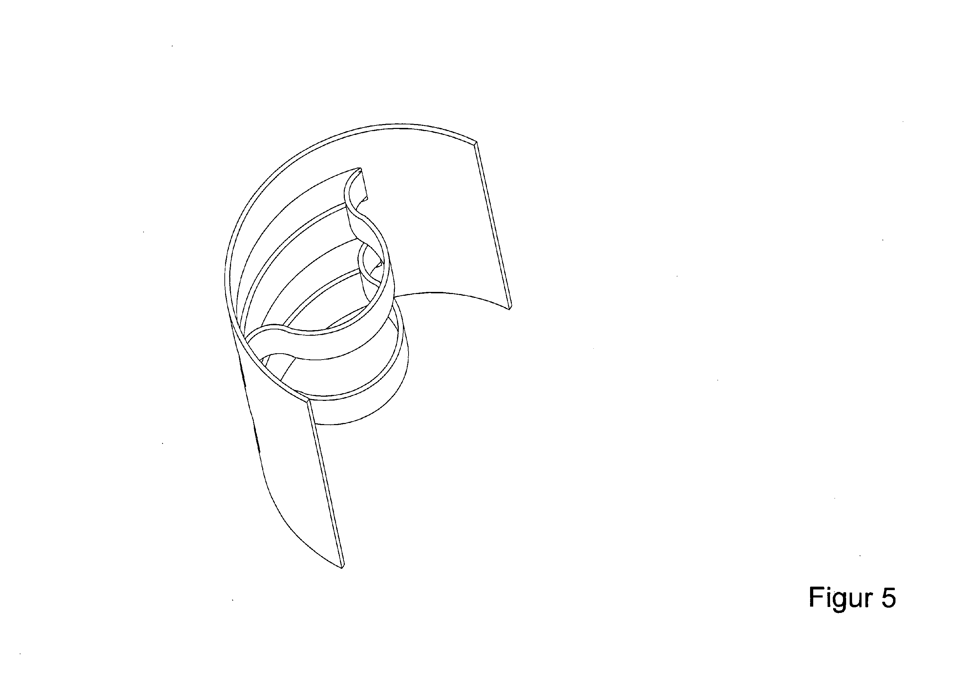

- Figur 5: eine Ansicht einer weiteren Ausführungsform eines erfindungsgemäßen Füllkörpers, bei der die Wandung des Füllkörpers statt durch einen Hohlzylinder durch einen offenen Halbzylinder gebildet wird, den man sich als durch einen Längsschnitt durch einen zylindrischen Füllkörper gemäß Figur 2 gebildet vorstellen kann.

Figur 1 zeigt, in vier Ansichten 1a, 1b, 1c und 1d, die Grundform eines erfindungsgemäßen Füllkörpers 1 mit der Grundform eines Hohlzylinders 2, in dem durch zwei auf dem

Zylinderumfang einander gegenüberliegende Paare von parallelen Einschnitten 4,4' stegartige Abschnitte 3 bzw. 3' gebildet werden, die unter Ausbildung bogenförmig geschwungener Stege in Richtung Zylinderachse ins Innere des Zylinder eingedrückt sind. Der Figur sind ferner die Bezeichnungen für die Zylinderhöhe H, den Zylinderradius R, den Zylinderdurchmesser D sowie für die Höhen der zylindrischen Zonen S und der Zonen mit den durch Eindrücken verformten Stegen h zu entnehmen. Die Bezugszeichen der Figur 1 gelten sinngemäß auch für die nachfolgenden Figuren 2 bis 5, werden dort jedoch nicht noch einmal gesondert ausgewiesen.

Wie insbesondere in Figur 1c zu erkennen ist, werden durch das Eindrücken der durch parallele Einschnitte 4,4a in die Zylinderwand gebildeten Stege in das Zylinderinnere bogenförmige geschwungene Stege 3 bzw. 3' gebildet, die zusätzliche Kontaktoberflächen und Ablaufflächen für die Flüssigkeit im Inneren des Hohlzylinders bilden. Dadurch ergeben sich kurze Kontaktzeiten im Inneren des Füllkörpers und eine häufigere Erneuerung des Flüssigkeitsfilms auf dem Füllkörper als bei einfachen Raschigringen. Dadurch erreicht man eine höhere Belastung, einen verbesserten Stoffaustausch bei gleichzeitig geringem Druckverlust, d.h. eine verbesserte Trennleistung einer Trennsäule.

Die Füllkörper sind aus Glas, vorzugsweise einem Borosilikatglas wie Borosilikatglas 3.3, hergestellt, und sie weisen eine Höhe H auf, die - in Abhängigkeit von der vorgesehenen Verwendung - im Bereich von 10 bis 80 mm liegen kann, wobei sich übliche Standardgrößen im chemischen Apparatebau von Angaben in inches ableiten und 25 mm, 34 mm und 48 mm betragen.

In Figur 2 sind über die Zylinderhöhe zwei Zonen mit jeweils zwei einander gegenüber liegenden eingedrückten Stegen vorhanden, wobei die Stege der beiden Zonen im wesentlichen parallel zueinander angeordnet sind, so dass die Wandung des Hohlzylinders in zwei einander gegenüberliegende durchgängige Wandabschnitte und zwei dazwischen angeordnete Wandabschnitte mit jeweils zwei parallelen Öffnungen und eingedrückten Stegen unterteilt wird.

In Figur 3 sind ebenfalls über die Zylinderhöhe zwei Zonen mit jeweils zwei einander gegenüber liegenden eingedrückten Stegen vorhanden, wobei die Stege der beiden Zonen jedoch um 90° gegeneinander versetzt sind, so dass die Wandung des Hohlzylinders in vier Wandabschnitte mit jeweils einer Öffnung mit einem eingedrückten Steg unterteilt wird. Gegenüber der Ausführungsform von Figur 2 ist die Ausführungsform von Figur 3 symmetrischer und von gleichmäßigerer Festigkeit, jedoch u.U. komplizierter in der Herstellung.

Die Figuren 4 und 5 zeigen Füllkörper in Form von Halbzylindern 5 mit einem Steg (Figur 4) bzw. zwei parallelen Stegen, die man sich als mittig geschnittene zylindrische Füllkörper gemäß den Figuren 1 und 2 vorstellen kann, ohne dass sie tatsächlich aus solchen zylindrischen Füllkörpern durch Schneiden erzeugt sein müssen.

Die erfindungsgemäßen Füllkörper vom Pallringtyp wurden dadurch zugänglich, dass man ein Verfahren konzipierte, bei dem man von Glasrohren mit einem für die gewünschte Füllkörpergröße passenden Durchmesser und einer entsprechenden Wanddicke ausgeht.

Ein solches Glasrohr kann durch eine Schneidstation geführt werden, auf der es gleichzeitig beidseitig oder nacheinander einseitig mit Paaren von parallelen Einschnitten in Umfangsrichtung versehen wird. Die Tiefe der Einschnitte liegt, bezogen auf den Rohrradius, zwischen 10 und 90 % eines Rohrradius, vorzugsweise zwischen 20 und 60 % eines Rohrradius. Das Schneiden kann durch Sägen oder vorzugsweise als Laserschneiden oder Wasserstrahlschneiden erfolgen. Dann wird das Glasrohr in eine Heizstation geführt, wo es auf eine solche Temperatur erwärmt wird, dass das Glas erweicht und durch Pressen verformbar wird, und die durch die parallelen Einschnitte gebildeten Abschnitte werden in Richtung der Rohrachse gedrückt. Dann wird das Glasrohr zwischen den Bereichen mit den Einschnitten in kurze Teilstücke geschnitten, die anschließend spannungsfrei geglüht werden.

Gleichzeitig oder anschließend werden die Füllkörper in Form kurzer zylindrischer Abschnitte feuerpoliert, wodurch Schnittkanten und Schnittflächen angeschmolzen und geglättet und abgerundet werden, was zu einer erheblichen Erhöhung der Festigkeit der fertigen Füllkörper führt und deren Korrodierbarkeit erheblich vermindert. Anschließend werden die fertigen Füllkörper abgekühlt und als Bulk-Ware abgepackt.

Statt das Erwärmen und Eindrücken der Stege am ungeschnittenen Glasrohr vorzunehmen, ist es auch möglich, das Glasrohr vor dem Eindrücken der Stege zwischen den Einschnitten in kurze Abschnitte zu schneiden und das Erwärmen und Eindrücken der Stege an den bereits geschnittenen Abschnitten vorzunehmen, wozu man vorzugsweise mit Pressformen arbeitet, in denen die geschnittenen Abschnitte fixiert werden, z.B. in kurzen halbzylindrischen Betten.

Die halbzylindrischen Füllkörper können durch Schneiden zylindrischer Formkörper hergestellt werden, sie können aber auch ausgehend von einer halbzylindrischen Glasrinne hergestellt werden, oder durch Verformung einzelner Glasplättchen in Pressformen, in denen gleichzeitig die Zylinderwand gebogen wird und der oder die Steg(e) eingedrückt wird/- werden.

## Patentansprüche

1. Füllkörper (1) vom Pallringtyp in Form von Hohlzylindern (2) oder Halbzylindern (5), bei denen Abschnitte (3) der Zylinderwand stegartig in Richtung der Zylinderachse eingebogen sind, **dadurch gekennzeichnet, dass** die Füllkörper vollständig aus einem temperatur- und chemikalienbeständigen Glas hergestellt sind.

2. Füllkörper nach Anspruch 1, **dadurch gekennzeichnet, dass** das temperatur- und chemikalienbeständige Glas ein Borosilikatglas, vorzugsweise Borosilikatglas 3.3, ist.

3. Füllkörper nach Anspruch 1 oder 2, **dadurch gekennzeichnet, dass** die stegartig eingebogenen Abschnitte (3) der Zylinder- oder Halbzylinderwand durch im wesentlichen parallele Einschnitte (4,4') in den Zylinderumfang im wesentlichen senkrecht zur Zylinderachse und durch Einbiegen der zwischen den parallelen Einschnitten (4,4') liegenden Umfangsbereiche in Richtung der Zylinderachse gebildet werden, wodurch die Höhe (H) des Zylinders (2) oder Halbzylinders (5) in zwei oder mehr Zonen aufgeteilt wird und sich durch Einbiegung (3) verformte Zonen mit Zonen der nicht verformten Zylinderwand abwechseln.

4. Füllkörper nach Anspruch 3, dass die Zylinderwand im Falle eines vollständigen Hohlzylinders (2) so eingeschnitten ist, dass in einer eingebogene Abschnitte (3) aufweisenden Zone zwei oder mehr stegartige eingebogene Abschnitte (3,3') vorhanden sind, die regelmäßig auf dem Umfang der Zone angeordnet sind.

5. Füllkörper nach Anspruch 4, **dadurch gekennzeichnet, dass** in einer eingebogene Abschnitte (3) aufweisenden Zone zwei stegartige eingebogene Abschnitte (3,3') angeordnet
sind, die sich auf dem Umfang der Zone gegenüber liegen.

6. Füllkörper nach einem der Ansprüche 3 bis 5, **dadurch gekennzeichnet, dass** die Höhe (H) des Zylinders (2) oder Halbzylinders (5) in mindestens drei Zonen aufgeteilt ist und die beiden Endabschnitte der Zylinders (2) oder Halbzylinders (5) von Zonen der nicht verformten Zylinderwand gebildet werden.

7. Füllkörper nach Anspruch 6, **dadurch gekennzeichnet, dass** mindestens zwei stegartig eingebogene Abschnitten aufweisende Zonen vorhanden sind, wobei die eingebogenen Abschnitte der verschiedenen Zonen parallel zueinander angeordnet sind (Figur 2) oder gegeneinander versetzt angeordnet sind (Figur 3).

8. Füllkörper nach einem der Ansprüche 1 bis 7, **dadurch gekennzeichnet, dass** die Tiefe (R-A) der parallelen Einschnitte (4,4') von 10 bis 90% der Radiuslänge (R) des Zylinders (2) oder Halbzylinders (5) beträgt.

9. Füllkörper nach einem der Ansprüche 1 bis 6, dass die Höhe (h) der durch Einbiegungen (3) gebildeten Zone oder Zonen von 5% bis 90%, vorzugsweise von 20% bis 60%, der Gesamthöhe (H) des Zylinders (2) oder Halbzylinders (5) beträgt, die sich aus der Summe der Höhen (h) der eingebogenen Zone(n) sowie der Summe der Höhen (S) der nicht durch Einbiegung verformten Zone(n) zusammensetzt.

10. Füllkörper nach Anspruch 9, **dadurch gekennzeichnet, dass** die Höhe einer Einbiegung (h) größer ist als die Höhe (S) einer nicht durch Einbiegung verformten Zone.

11. Füllkörper nach einem der Ansprüche 1 bis 10, **dadurch gekennzeichnet, dass** eine stegartige Einbiegung (3) einen durchgehenden Steg bildet.

12. Füllkörper nach einem der Ansprüche 1 bis 10, **dadurch gekennzeichnet, dass** eine stegartige Einbiegung im wesentlichen parallel zur Achse des Zylinders oder Halbzylinders durchtrennt ist und zwei eingebogene Zungen bildet.

13. Füllkörper nach einem der Ansprüche 1 bis 12, **dadurch gekennzeichnet, dass** die Höhe (H) des Zylinders (2) oder Halbzylinders (5) einen Wert aufweist, der zwischen der Hälfte des Zylinderdurchmessers (D) und dem Doppelten des Zylinderdurchmessers (D) liegt.

14. Füllkörper nach Anspruch 13, **dadurch gekennzeichnet, dass** die Höhe (H) dem Zylinderdurchmesser (D) gleich ist.

15. Füllkörper nach einem der Ansprüche 1 bis 14, **dadurch gekennzeichnet, dass** die Höhe (H) des Hohlzylinders (2) oder Halbzylinders (5) im Bereich von 10 bis 80 mm, vorzugsweise im Bereich von 20 bis 50 mm, liegt.

16. Verfahren zur Herstellung eines Füllkörpers nach einem der Ansprüche 1 bis 15, **dadurch gekennzeichnet, dass** man
- ein im wesentlichen rundes Glasrohr aus einem temperatur- und chemikalienbeständigen Glas mit paarweise angeordneten, im wesentlichen parallelen Einschnitten versieht,
- das Glasrohr quer zur Rohrachse in kurze zylindrische Abschnitte schneidet,
- und das Glasrohr vor dem Schneiden oder die kurzen zylindrischen Abschnitte nach dem Schneiden durch Erwärmen verformbar macht und die zwischen den parallelen Einschnitten befindlichen Abschnitte der Rohrwand oder Zylinderwand in Richtung der Rohr- oder Zylinderachse eindrückt.

17. Verfahren nach Anspruch 16, **dadurch gekennzeichnet, dass** man das Glasrohr und/oder die kurzen zylindrischen Abschnitte, die eingedrückte Zonen und nicht eingedrückte Zonen aufweisen, durch Glühen spannungsfrei macht.

18. Verfahren nach Anspruch 16 oder 17, **dadurch gekennzeichnet, dass** man die Schnittkanten der erhaltenen kurzen zylindrischen Abschnitte durch Feuerpolieren glättet, und die durch Feuerpolieren geglätteten zylindrischen Abschnitte abkühlen lässt.

19. Verfahren nach Anspruch 16, **dadurch gekennzeichnet, dass** das Glasrohr durch Sägen oder Laserschneiden oder Wasserstrahlschneiden mit parallelen Einschnitten in Umfangsrichtung versehen wird.

20. Verfahren nach einem der Ansprüche 16 bis 19, **dadurch gekennzeichnet, dass** man das Glasrohr oder die kurzen zylindrischen Abschnitte in einem zusätzlichen Schritt durch Schneiden in Längsrichtung in zwei halbzylindrische Rohr- oder Zylinderteile schneidet und halbzylindrische Füllkörper herstellt.
